# EUROPEAN PATENT SPECIFICATION

(11) **EP 1 551 779 B1**
(45) Date of publication and mention of the grant of the patent: **24.01.2007**
(21) Application number: 03753788.3
(22) Date of filing: 15.10.2003
(51) Int. Cl.: C04B 40/00, B28B 19/00, B28C 5/06

(54) **METHOD AND APPARATUS FOR PRODUCING A MULTILAYER CEMENTITIOUS PRODUCT**
VERFAHREN UND VORRICHTUNG ZUR HERSTELLUNG EINES MEHRSCHICHTIGEN ZEMENTÄREN PRODUKTES
PROCEDE ET APPAREIL DE PRODUCTION D'UN PRODUIT CIMENTAIRE MULTICOUCHE

(30) Priority: 15.10.2002 GB 0223875
(43) Date of publication of application: 13.07.2005
(73) Proprietor: BPB plc, 81 Aldwych London WC2B 4HQ (GB)
(72) Inventor: O'KEEFE, Samantha Jane, BPB Plc, East Leake, Loughborough, LE12 6JS (GB); WOOD, Matthew James, BPB Plc, East Leake, Loughborough, LE12 6JS (GB); WICHT, Andreas, BPB Plc, East Leake, Loughborough, LE12 6JS (GB)
(74) Representative: Chapman, Helga Claire
(86) International application number: PCT/GB2003/004445
(87) International publication number: WO 2004/035505

(56) References cited:
- EP-A- 0 681 999
- EP-A- 0 742 179
- WO-A-97/23337
- DE-A- 2 201 717
- US-A- 4 046 357
- US-A- 5 246 163
- US-B1- 6 423 133

## Description

This invention relates to a method and apparatus for manufacturing cementitious based products such as prefabricated building components. Examples of such products include gypsum plasterboards, partition panels, ceiling tiles and fibre-reinforced boards.

Gypsum is the common name for calcium sulphate CaSO4 in mineral form and the hemihydrate form, also known as stucco or Plaster of Paris, is produced by heat conversion of the dihydrate gypsum. Stucco is the primary constituent used in the manufacture of the aforementioned products.

Products such as gypsum plasterboard are produced from the basic materials, paper in the form of cardboard, stucco, water, starch and some additives such as an accelerator and retarder and foam. Wallboards or plasterboards are large thin gypsum panels covered with cardboard. The stucco is fed into a continuous mixer with water and the additives. The slurry produced is then fed onto a continuous sheet of cardboard, covered with a second sheet of cardboard and then passed over a moulding platform to be shaped into an encased strip. This strip of gypsum plasterboard is initially soft but then quickly sets and therefore hardens and is cut into separate panels. The panels are dried and finished as required.

It is important that the plaster board is sufficiently set by the time it reaches the board cutter. Plaster boards are manufactured on a continual basis and the position of the cutter varies depending on the plant characteristics. It is commercially desirable that the production rate of the plaster board is increased and therefore the time taken for the board to reach the cutter is reduced.

Ceiling tiles and partition panels are produced by a similar process although the slurry is poured into moulds to produce the desired shape and size. If fibreboards are required the slurry also contains suitable fibres such as glass or paper fibres.

The setting and hardening of the slurry can be controlled by numerous additives. Accelerators such as inorganic acids and their salts such as potassium or sulphuric acid and their salts are especially useful. Ca SO₄.2H₂O (ground gypsum mineral mixed with soap (Nansa)) is commonly used. Accelerators enable the slurry to set more quickly, in part, by increasing the solubility of the gypsum.

Accelerators are essential for quickening the setting and hardening of the slurry, however retarders are also used to control the rapid water uptake and often comprise water-soluble hydrophilic colloids such as proteins. This enables the soft plaster slurry to remain plastic until the process has been completed resulting in better bonding to the base.

In known gypsum manufacturing processes all the additives are metered into a mixer where they are fully combined with the slurry before being extruded onto the cardboard or fed into moulds. However in some instances the setting and hardening process occurs too quickly, in the mixer itself, causing hydration in the mixer or lumps in the extruded mixture.

According to the present invention there is provided a method of manufacturing a multilayered gypsum board product comprising the steps of:
a) combining a cementitious material with water within a mixing container so as to form an aqueous slurry,
b) discharging the slurry from said mixing container through an outlet onto a support, such that the slurry is in a turbulent state at the entrance of said outlet;
c) inserting a setting accelerator into said slurry at or close to said outlet and said slurry's exit from the mixer such that the accelerator is mixed with the slurry in the slurry's turbulent state.

Advantageously the accelerator is introduced into the cementitious slurry without being wholly introduced into the mixing container, thus avoiding the possibility of full or partial setting or hardening of the slurry within the mixer and hence damage to the mixer itself. Also sufficient amounts of the accelerator can be introduced to the plaster slurry to provide a much faster set and hydration of the board in production without causing any setting or hydration in the mixer.

The accelerator may be inserted into the slurry at the entrance to the mixer container outlet. Advantageously the introduction of the accelerator at the entrance to the outlet enables the accelerator to mix with the slurry from the mixer before it is transferred to the paper or cardboard support.

Also advantageously the accelerator mixes with the slurry without the need to be combined with the slurry in the mixer itself, as is the case with known processes. The turbulence of the mixture as it enters the mixer outlet provides enough agitation to mix the accelerator into the slurry.

The accelerator may comprise at least one of the aluminium sulphate, zinc sulphate and potassium sulphate or other water soluble salts which form a sulphate when mixed.

The accelerator may be in the form of a powder.

The accelerator may be in the form of an aqueous solution.

The accelerator may alternatively be in the form of a slurry.

The accelerator may comprise wet ground gypsum.

The cementitious material may be gypsum plaster or stucco.

The support may be paper or cardboard sheet.

The outlet may be a conduit.

A second paper or cardboard sheet may be applied over the slurry located on said first support.

The invention will now be described by way of example with reference the accompanying drawings in which:

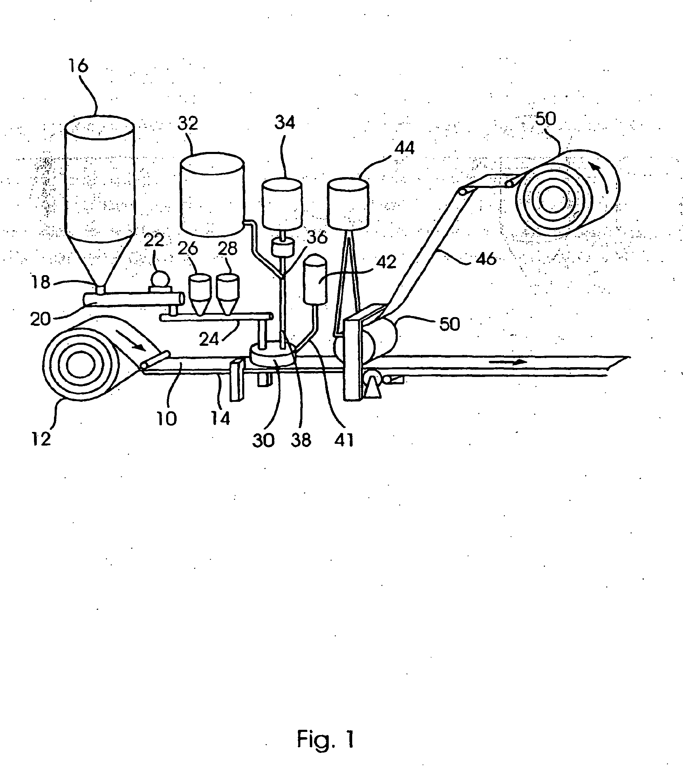

Figure 1 is a diagrammatic view of plasterboard production apparatus according to an embodiment of the invention.
Figure 2 is a schematic & semi diagrammatic drawing of plasterboard production apparatus according to an embodiment of the invention.

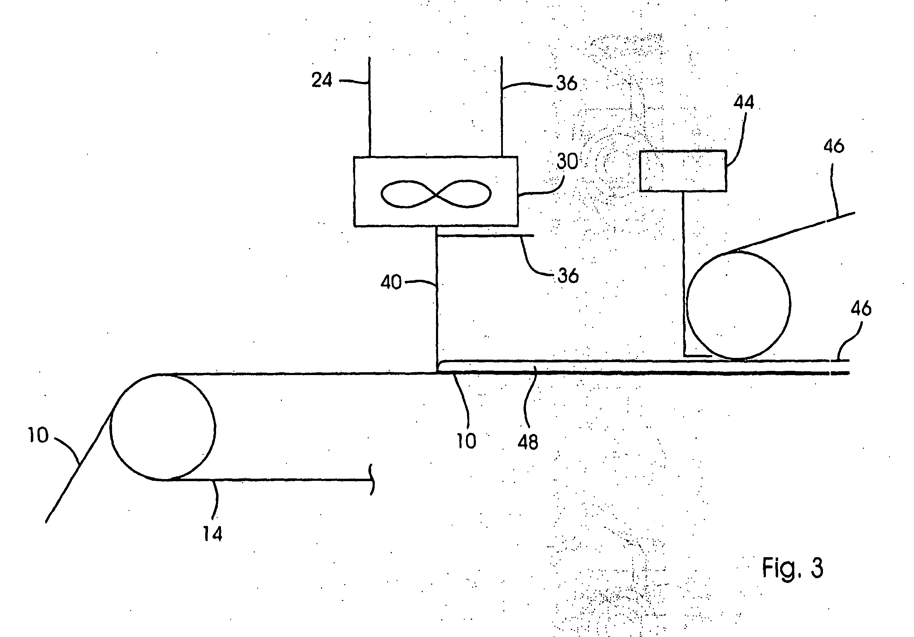

Figure 3 is a schematic drawing of the mixer of figure 1.
Figure 4 is a schematic drawing of the mixer outlet of figure 2.
Figure 5 is a view along the line X-X of figure 4 without showing the accelerator input conduit.

A first layer of paper 10 is fed from a roll 12 onto a conveyor or belt 14. A storage container 16 contains stucco (typically β-hemihydrate plaster) and is provided with an outlet 18. The outlet is connected to conduit 20. A meter 22 is connected to said conduit 20 for measuring and controlling the amount of stucco fed through the conduit 20.

A further conduit 24 is connected to the conduit 20 and two further storage containers 26 and 28. Each storage container 26, 28 contains appropriate additives used in the plasterboard process. Such additives may comprise retarders such as organic acids and their salts or adhesives, binders, dispersion aids and other conventional additives imparted in known quantities to facilitate manufacturing.

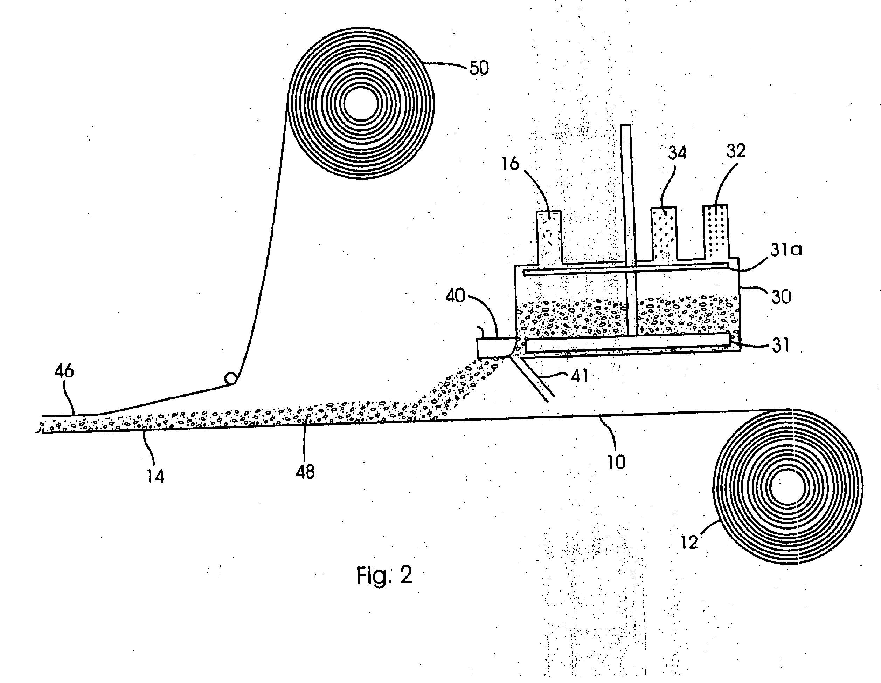

The conduit 24 is connected at its outlet to a mixer 30. The mixer comprises a cylindrical housing containing a rotating disk shown 31 and scraper blades 31a, as shown in figure 2. The scraper blades are positioned and shaped so as to keep the mixer lid free from a build up of plaster.

A water container 32 is connected to the conduit 36 of a further additive storage container 34. The container 34 stores further additives such as foaming agents. The water or further additive conduit is connected to the mixer 30 at its conduit outlet 38.

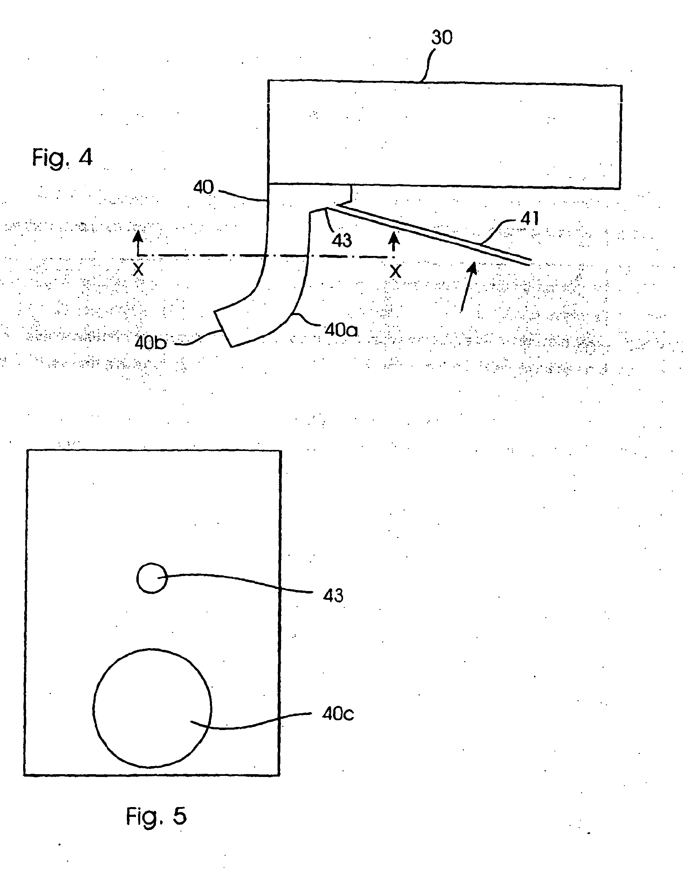

The mixer 30 is provided with an outlet 40 to deliver its combined contents in the form of a slurry onto the paper 10. As shown in figure 4 the plaster slurry is directed from the mixer outlet 40 via a spout 40a onto the paper 14. The spout 40a may be fabricated from steel or other suitable material. The outlet end 40b of the spout 40a may be connected to a flexible conduit (not shown) which guides the plaster slurry onto the paper 14 to minimise splashing. A further storage container 42 contains an accelerator additive such as dihydrate slurry. The accelerator storage container 42 is connected to the mixer outlet 40 via conduit 41 close to where the mixer outlet is connected to the mixer 30. This is shown more clearly with reference to figure 4. The mixer outlet 40 essentially comprises an aperture 40c which is also the opening or inlet of the spout 40a. It is to be understood that more than one mixer outlet aperture may be present. These apertures 40 may be formed in the underside of the mixer 30 or may also be positioned tangentially or radially on the mixer 30. The apertures 40 may be of any suitable shape such as elliptical, circular or rectangular. The position of the mixer outlet and the number of outlets required is dependent on the production process speed and other production plant characteristics. The important criterion is that the plaster slurry is required to cover all of the paper 14 it is directed onto.

A further storage container 44 contains a suitable bonding agent for bonding the overlapping edges of the paper 10 and 46. A second layer of paper 46 is stored and fed from a roll 50 to cover the top surface of the slurry 48.

Cementitious, or more specifically, gypsum products, such as plasterboard, are formed by feeding a first layer 10 of paper from a roll 12 onto a moving conveyor or belt. This layer of paper could comprise cardboard of about 0.5mm thickness or any other preferred arrangement of paper.

The stucco stored in storage container 16 is delivered into conduit 20, the amount delivered being metered and controlled by the meter 22. This stucco is combined with additives delivered from the containers 24 and 26 and fed into the mixer 30. Other additives are combined with water from the water and additive storage containers 32 and 34. This mixture is combined in the mixer 30 to produce a slurry which is then delivered through an outlet pipe 40 onto the paper 10 provided on the moving belt 14.

The accelerator, for example dihydrate, is fed via a conduit 41 into the slurry 48 from the mixer 30 at the entrance to the mixer outlet 40. Advantageously the accelerator is not fed into the top of the mixer 30 as is the case with the other additives, but only introduced through an aperture 43 formed in the outlet 40 of the mixer 30. Thus the effects of the accelerator, for example to quicken the hardening or setting of the slurry are not produced in the mixer itself.

It is envisaged that the accelerator may be any known accelerator in any suitable form such as powder or liquid slurry. However it is proposed to use an accelerator comprising a ground mineral slurry such as finely ground gypsum using a wet milling process or desulphogypsum (a by product created from the removal of sulphur dioxide from flue gases at coal fired power stations).

The mixed slurry contained and delivered from the mixer 30 is provided in a turbulent state at the entrance to the mixer outlet 40. Thus the accelerator is mixed well with this turbulent mixture delivered to the outlet 40 from the mixer 30 despite not having been conventionally mixed in the mixer. This homogenous mix of accelerator and cementitious slurry from the mixer may also advantageously produce a shorter setting time of the plaster.

It is not essential to the invention that the accelerator is delivered directly into the mixer outlet 40 but rather that it is delivered to the slurry of the mixer close to its exit from the mixer 30.

The slurry stream 48 is then provided with a bonding agent or adhesive and a further layer of paper 46 is provided over its upper surface. The slurry is therefore sandwiched between the two sheets of paper or cardboard 10 and 46. These two sheets become the facings of the resultant gypsum board.

The thickness of the resultant board is controlled by a roll 50 and the board is subsequently prepared by employing appropriate mechanical devices to cut or score, fold and glue the overlapping edges of the paper cover sheets 10, 46. Additional guides maintain board thickness and width as the setting slurry travels on the moving conveyor belt. The board panels are cut and delivered to dryers to dry the plasterboard.

Advantageously by adding the accelerator to the outlet 40 of the mixer 30 sufficient amounts of accelerator can be added which may produce a faster setting time than would be provided by the conventional method of adding the accelerator to the mixer. Also the need for 'retarders' (chemicals added to the mixer to delay the onset of setting) may also be removed. Such retarders are expensive and are also known to be detrimental to the board produced and further complicate the manufacturing process. Also the problems associated with early setting of plaster in the mixer may be alleviated.

## Claims

1. A method of manufacturing a multilayered gypsum board product comprising the steps of:
a) combining a cementitious material with water within a mixing container so as to form an aqueous slurry,
b) discharging the slurry from said mixing container through an outlet onto a support, such that the slurry is in a turbulent state at the entrance of said outlet;
c) inserting a setting accelerator into said slurry at or close to said outlet and said slurry's exit from the mixer such that the accelerator is mixed with the slurry in the slurry's turbulent state.

2. A method according to claim 1 wherein the accelerator is inserted into the slurry at the entrance to the mixer container outlet.

3. A method according to any one of the preceding claims wherein the accelerator comprises a water soluble salt which forms a sulphate when employed as an accelerator.

4. A method according to claim 1 or claim 2 wherein the accelerator is in the form of a powder.

5. A method according to claim 1 or claim 2 wherein the accelerator is in the form of an aqueous solution or formed from a mix of an aqueous solution.

6. A method according to claim 1 or claim 2 wherein the accelerator is in the form of a paste.

7. A method according to claim 1 or claim 2 wherein the accelerator is in the form of a slurry.

8. A method according to claim 1 or claim 2 wherein the accelerator is in the form of a suspension.

9. A method according to any one of the preceding claims wherein the cementitious material is gypsum plaster or stucco.

10. A method according to any one of the preceding claims wherein the support is a paper or cardboard sheet.

11. A method according to any one of the preceding claims wherein the outlet is a conduit.

12. A method according to any one of the preceding claims wherein the accelerator is in the form of finely wet ground gypsum.

13. A method according to claim 11 wherein a second paper or cardboard sheet is applied over the slurry located on said first support.

## Patentansprüche

1. Ein Verfahren zur Herstellung mehrlagiger Gipskartonplatten mit den folgenden Verfahrensschritten:
a) Mischen eines zementartigen Materials mit Wasser in einem Mischbehälter, so dass ein wässriger Brei gebildet wird.
b) Ablassen des Breis aus dem genannten Mischbehälter durch einen Auslauf auf ein Trägermaterial, so dass der Brei sich am Eingang des genannten Auslaufs in einem turbulenten Zustand befindet;
c) Hinzufügen eines Abbindebeschleunigers in den genannten Brei am oder in der Nähe des genannten Auslaufs und des Ausfließen des Breis aus dem Mischer, so dass der Beschleuniger mit dem Brei vermischt wird, wobei sich der Brei in einem turbulenten Zustand befindet.

2. Ein Verfahren nach Anspruch 1, wobei der Beschleuniger dem Brei am Eingang zum Mischbehälterauslass zugefügt wird.

3. Ein Verfahren nach einem der bereits genannten Ansprüche, wobei der Beschleuniger ein wasserlösliches Satz enthält, was ein Sulfat bildet, wenn es als Beschleuniger eingesetzt wird.

4. Ein Verfahren nach Anspruch 1 oder Anspruch 2, wobei der Beschleuniger in Pulverform vorliegt.

5. Ein Verfahren nach Anspruch 1 oder Anspruch 2, wobei der Beschleuniger in Form einer wässrigen Lösung oder geformt aus einer Mischung wässriger Lösungen vorliegt.

6. Ein Verfahren nach Anspruch 1 oder Anspruch 2, wobei der Beschleuniger in Pastenform vorliegt.

7. Ein Verfahren nach Anspruch 1 oder Anspruch 2, wobei der Beschleuniger in Form eines Breies vorliegt.

8. Ein Verfahren nach Anspruch 1 oder Anspruch 2, wobei der Beschleuniger in Form einer Suspension vorliegt.

9. Ein Verfahren nach einem der bereits genannten Ansprüche, wobei das zementartige Material ein Gipsputz oder eine Stuckmasse ist.

10. Ein Verfahren nach einem der bereits genannten Ansprüche, wobei das Trägermaterial eine Papier- oder Kartonlage ist.

11. Ein Verfahren nach einem der bereits genannten Ansprüche, wobei der Auslass ein Rohr ist.

12. Ein Verfahren nach einem der bereits genannten Ansprüche, wobei der Beschleuniger in Form von nassem, gemahlenem Gips vorliegt.

13. Ein Verfahren nach Anspruch 11, wobei eine zweite Papier- oder Kartonlage auf den Gipsbrei aufgebracht wird, der sich auf dem ersten Trägermaterial befindet.

## Revendications

1. Méthode de fabrication d'un produit plaque de plâtre multicouche comprenant les étapes suivantes :
a) combinaison d'un matériau cimentaire avec de l'eau au sein d'un récipient de mélange afin de former un coulis aqueux,
b) déversement du coulis dudit récipient de mélange à travers un orifice de sortie sur un support, de manière à ce que le coulis soit dans un état turbulent à l'entrée dudit orifice de sortie;
c) insertion d'un accélérateur de prise dans ledit coulis au niveau de ou à proximité dudit orifice de sortie et sortie dudit coulis du mélangeur de manière à ce que l'accélérateur soit mélangé au coulis avec ce coulis en état turbulent.

2. Méthode selon la revendication 1 dans laquelle l'accélérateur est inséré dans le coulis à l'entrée de l'orifice de sortie du conteneur du mélangeur.

3. Méthode selon l'une quelconque des revendications précédentes dans laquelle l'accélérateur comprend un sel hydrosoluble qui forme un sulfate lorsqu'il est utilisé comme accélérateur.

4. Méthode selon la revendication 1 ou la revendication 2 dans laquelle l'accélérateur est sous forme de poudre.

5. Méthode selon la revendication 1 ou la revendication 2 dans laquelle l'accélérateur est sous forme d'une solution aqueuse ou formé à partir d'un mélange d'une solution aqueuse.

6. Méthode selon la revendication 1 ou la revendication 2 dans laquelle l'accélérateur est sous forme d'une pâte.

7. Méthode selon la revendication 1 ou la revendication 2 dans laquelle l'accélérateur est sous forme d'un coulis.

8. Méthode selon la revendication 1 ou la revendication 2 dans laquelle l'accélérateur est sous forme d'une suspension.

9. Méthode selon l'une quelconque des revendications précédentes dans laquelle le matériau cimentaire est du gypse du plâtre ou du stuc.

10. Méthode selon l'une quelconque des revendications précédentes dans laquelle le support est une feuille de papier ou de carton.

11. Méthode selon l'une quelconque des revendications précédentes dans laquelle l'orifice de sortie est une conduite.

12. Méthode selon l'une quelconque des revendications précédentes dans laquelle l'accélérateur est sous forme de gypse humide fmement pulvérisé.

13. Méthode selon la revendication 11 dans laquelle une seconde feuille de papier ou de carton est appliquée sur le coulis situé sur ledit premier support.
